# EUROPÄISCHE PATENTANMELDUNG

(11) **EP 2 409 560 A1**
(43) Veröffentlichungstag der Anmeldung: **25.01.2012**
(21) Anmeldenummer: 11401551.4
(22) Anmeldetag: 18.07.2011
(51) Int. Cl.: A01C 17/00

(54) **Zentrifugalstreuer**

(30) Priorität: 22.07.2010 DE 102010036557
(71) Anmelder: Amazonen-Werke H. Dreyer GmbH & Co. KG, 49205 Hasbergen (DE)
(72) Erfinder: Johannaber, Stefan Jan, 49536 Lienen (DE); Rahe, Florian, 49504 Lotte (DE); Scheufler, Bernd, 49205 Hasbergen (DE)

(57) **Zusammenfassung**

Zentrifugalstreuer mit Vorratsbehälter und zumindest einer von einer Antriebsvorrichtung rotierend angetriebenen und mit Wurfschaufeln besetzte Schleuderscheibe, der die auszubringenden körnigen Materialien in einstellbaren Mengen aus dem Vorratsbehälter über zumindest eine von zumindest einer motorischen Einstelleinrichtungen einstellbaren Dosiereinrichtung zuführbar sind, wobei zumindest ein Sensor einer Wiegevorrichtung zur direkten Ermittlung der Masse des sich im Vorratsbehälter befindlichen auszubringenden Materiales vorhanden ist, wobei zumindest ein Sensor zur indirekten Ermittlung des von der Dosiereinrichtung der Schleuderscheibe zugeleiteten Massenstromes vorhanden ist, wobei die Sensoren der Wiegeeinrichtung und der der Massenstromermittlung die von ihnen ermittelten Daten an einem Bordrechner zur Auswertung und zur Anzeige auf einer Anzeigevorrichtung und/oder die Regelung und/oder Ansteuerung der Einstelleinrichtung der Dosiereinrichtung übermitteln, dadurch gekennzeichnet, dass in dem Speicher des Bordrechner ein Programm mit Algorithmen hinterlegt ist, so dass die Messwerte der Wiegeeinrichtung Mitte den Messwerten der Massenstromermittlung so miteinander verknüpft werden, so dass eine Kalibrierung der Werte der Massenstromermittlung erfolgt und/oder durchführbar ist.

## Beschreibung

Die Erfindung betrifft einen Zentrifugalstreuer gemäß des Oberbegriffes des Patentanspruches 1.

Ein derartiger Zentrifugalstreuer wird in der Zeitschrift "eilbote / 26 / 2010", Seite 15, untere linke Hälfte beschrieben. Dieser Zweischeiben-Düngerstreuer Rauch AXIS-H 50.1 EMC+W weist eine Kombination aus hydraulischen Wurfscheibenantrieb, EMC-Dosiersystem zur Massenstromregelung und zusätzlich ein Wiegesystem zur Kontrolle des Behälterinhaltes und Dokumentation auf.

Das EMC-Dosiersystem ist in der EP 0 963 690 A1 beschrieben.

Das Wiegesystem zur Kontrolle des Behälterinhaltes und Dokumentation ist in der DE 198 38 739 A1 beschrieben.

Die beiden in der Zeitschrift "eilbote / 26 / 2010" erwähnten Systeme der dort beschriebenen Kombination arbeiten jeweils separat. Das EMC-Dosiersystem zur Massenstromregelung dient ausschließlich zur Überwachung und Regelung der Ausbringensmenge und das Wiegesystem dient ausschließlich der Kontrolle des Behälterinhaltes unter der Dokumentation hinsichtlich der ausgebrachten Düngermenge. Das EMC-Dosiersystem zur Massenstromregelung weist ein sehr aufwändiges elektronisches Regelsystem auf. Eine einfache Nachkalibrierung im Hinblick auf die Einsatzbedingungen ist hier nur schwer möglich.

Der Erfindung liegt die Aufgabe zu Grunde, in einfacher Weise den Sensor und oder die Messdaten des Sensors der Massenstromeinrichtung zur indirekten Ermittlung des Massenstromes in kurzen Zeitabständen in automatischer Weise entsprechend den Einsatzbedingungen kalibrieren und/oder nachkalibrieren zu können.

Diese Aufgabe wird erfindungsgemäß dadurch gelöst, dass in dem Speicher des Bordrechners ein Programm mit Algorithmen hinterlegt ist, so dass die Messwerte der Wiegeeinrichtung mit den Messwerten der Massenstromeinrichtung so miteinander verknüpft werden, so dass eine intervallweise Kalibrierung der Werte der Massenstromermittlung der Massenstromeinrichtung aufgrund der jeweils aktuell ermittelten Messwerte erfolgt und/oder durchführbar ist.

Infolge dieser Maßnahmen kann ein einfacher Sensor zur Erfassung der Messwerte der Massenstromeinrichtung mit einem einfachen und preiswerten elektronischen Regelsystem verwendet werden. Die Messwerte der Massenstromeinrichtung werden über das in dem Speicher des Bordrechners hinterlegte Programm in einfacher Weise aufgrund der aktuellen Messwerte des Wiegesystems kalibriert und/oder nachkalibriert. Die Messwerte der Massenstromeinrichtung werden somit an die Messwerte der Wiegevorrichtung angepasst.

Die als Wiegezelle ausgebildeten Sensoren des Wiegesystems liefern in regelmäßigen Zeitabständen einen Messwert in Verbindung mit dem Bordrechner. Dieser Messwert lässt eine direkte, also absolute Aussage zur Gewichtsänderung zu.

Die von den Sensoren der Massenstromeinrichtung indirekt ermittelten Messwerte werden über das erfindungsgemäße System funktional mit den direkten Messwerten der Wiegevorrichtung verknüpft, so dass sich die indirekten Messwerte der Massenstromeinrichtung kalibrieren lassen.

In einer Ausführungsform der Erfindung ist vorgesehen, dass der Sensor der Massenstromeinrichtung zur Ermittlung des Drehmoment des der Antriebsvorrichtung geeignet ist. Mittels dieses Sensors lässt sich über das ermittelte Drehmoment indirekt eine Aussage hinsichtlich des augenblicklichen Massenstromes der ausgebrachten Düngermenge treffen. Dies in besonders einfacher Weise, wenn, wie erfindungsgemäß vorgeschlagen, die Messwerte der Massenstromeinrichtung mit den Messwerten der Wiegeeinrichtung in intelligenter Weise miteinander verknüpft werden.

In einer Variante ist vorgesehen, dass der Sensor der Massenstromeinrichtung zur Messung des Druckes in einem hydraulischen Antriebssystem zum Antrieb der mit Wurfschaufeln besetzten Schleuderscheiben ausgebildet ist.

In einer anderen Variante ist vorgesehen, dass der Sensor der Massenstromeinrichtung zur Messung des Drehmomentes in einem mechanischen Antriebssystem zum Antrieb der mit Wurfschaufeln besetzten Schleuderscheiben ausgebildet ist.

In einer weiteren Ausführungsform der Erfindung ist vorgesehen, dass der Sensor der Massenstromeinrichtung zur Abtastung des von den Wurfschaufeln der Schleuderscheibe abgeworfenen Materialstromes geeignet ist.

In einer weiteren Ausführungsform der Erfindung ist vorgesehen, dass der Sensor der Massenstromeinrichtung an zumindest einer der Wurfschaufeln und/oder auf der Schleuderscheibe, vorzugsweise im Bereich zumindest einer der Wurfschaufeln angeordnet ist.

Aufgrund der funktionalen Verknüpfung der indirekten Messwerte des Sensors der Massenstromeinrichtung mit den direkten Messwerten des Sensors der Wiegevorrichtung kann bei dem elektronischen Regelsystem der Massenstromeinrichtung auf die Hinterlegung eines aufwändigen Belastungskennfeldes verzichtet werden. Das neue kombinierte Regel- und Ausbringmengenerfassungssystems zeichnet sich durch einen einfachen Regelalgorithmus und einem schnell reagierenden Mengeneinstellsystem aus.

Weitere Einzelheiten der Erfindung sind der Beispielsbeschreibung und den Zeichnungen zu entnehmen. Hierbei zeigen
- Fig. 1: einen erfindungsgemäß ausgestalteten Zentrifugalstreuer in Seitenansicht und Prinzipdarstellung,
- Fig. 2: einen weiteren erfindungsgemäß ausgestalteten Zentrifugalstreuer in Seitenansicht und Prinzipdarstellung und
- Fig. 3: ein Blockschaltbild mit der Verknüpfung der Massenstromeinrichtung mit der Wiegeeinrichtung.

Die als Schleuderdüngerstreuer ausgebildete Verteilmaschine weist den Rahmen 1 und den Vorratsbehälter 2 auf. Das untertrichterförmige Ende des Vorratsbehälters 2 ist mit der schematisch dargestellten Dosiereinrichtung 3 ausgestattet, die das sich im Vorratsbehälter 2 befindliche Material in einstellbarer Weise der unterhalb der Dosiereinrichtung und des Vorratsbehälters angeordneten Verteileinrichtung 4 zuführt. Die Verteileinrichtung 4 ist als rotierend angetriebene Schleuderscheibe 5, die Wurfschaufeln 6 aufweist, ausgebildet. Die Dosiereinrichtung 3 besitzt eine motorische Stelleinrichtung, die in bevorzugter Weise als elektrischer Stellmotor 7 ausgebildet ist und von dem dargestellten Bordcomputer 8 über die Leitung 9 angesteuert wird.

Der Rahmen 1 weist auf seiner Vorderseite zwei untere Kupplungspunkte 10 und einen oberen Kupplungspunkt 11 auf. An den unteren Kupplungspunkten 10, die beabstandet zueinander angeordnet sind, der zumindest in etwa den Abstand der unteren Dreipunktkupplungselemente entspricht, sind Wiegezellenelemente 12 einer Wiegeeinrichtung 13 angeordnet. An den vorderen unteren Enden der beiden Wiegezellenelemente 12 ist über Kupplungsbolzen 14 der Dreipunktkupplungselemente 15 aufweisende Vorsatzrahmen 16 angeordnet. Im oberen Bereich ist der Vorsatzrahmen 16 über eine zumindest annähernd parallel zu den Wiegezellenelementen 12 verlaufenden Zwischenlenker 17 mit den Rahmen 1 der Verteilmaschine verbunden. Über die Dreipunktkupplungselemente 15 des Vorsatzrahmens 16 wird die Verteilmaschine an die Unterlenker 15' und Oberlenker 15" der Dreipunktkupplung eines Ackerschleppers angekuppelt.

Aufgrund der Anordnung des Vorsatzrahmens 16 über die beiden Wiegezellen 12 und den oberen Zwischenlenker 12 ist eine Relativbewegung zwischen dem Rahmen 1 der Maschine und dem Vorsatzrahmen 16 möglich. Hierdurch können die Wiegezellen 12 Messwerte aufnehmen und diese über Leitungen 18 an den Bordcomputer 8 übermitteln, in welchem diese Messwerte ausgewertet werden, um aufgrund der Messwerte, die die Gewichtsabnahme pro Zeit oder Wegeinheit repräsentieren, die dann tatsächlich ausgebrachte Materialmenge zu ermitteln.

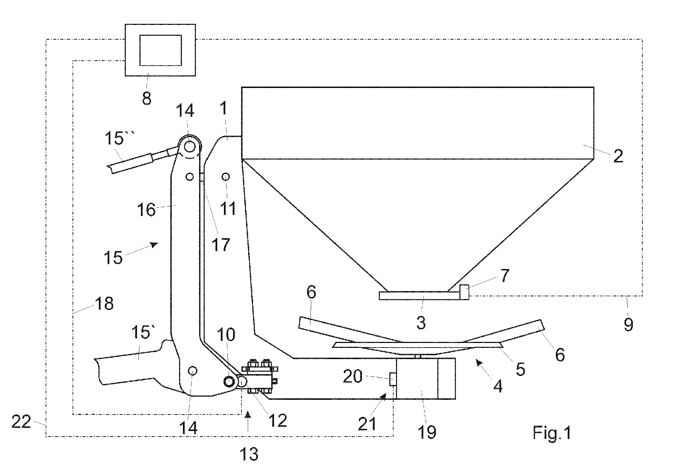

Bei dem Zentrifugalstreuer gemäß Fig. 1 ist der Antriebseinrichtung 19 zumindest ein Sensor 20 zugeordnet. Mittels dieses Sensors lässt sich ein Messwert für das jeweilige Drehmoment der Antriebsvorrichtung 19 für die Schleuderscheibe 5 bei der jeweils aktuellen Ausbringmenge ermitteln. Die jeweilige Antriebsvorrichtung 19 für den Antrieb der Schleuderscheiben 5 kann ein hydraulisches oder mechanisches Antriebssystem der mit Wurfschaufeln 6 besetzten Schleuderscheiben 5 sein. Bei einem Zweischeibensteuer mit zwei Schleuderscheiben 5 ist der Antriebsvorrichtung 19 jeder Schleuderscheibe 5 ein Sensor 20 zugeordnet. Die von dem ermittelten Sensoren 20 der Massenstromeinrichtung 21 ermittelten und an dem Bordcomputer 8 über die Datenleitung 22 übermittelten Messwerte stellen ein Maß für den ausströmenden Massenstrom des auszubringenden Materiales von der jeweiligen Dosiervorrichtung 3 zu der jeweiligen Schleuderscheibe 5 dar. Mittels dieser ermittelten Werte der Massenstromeinrichtung 21 wird von dem Bordrechner 8 über die Datenleitung 9 die Stelleinrichtung 7 der Dosiereinrichtung 3 entsprechend mit Daten beaufschlagt, so dass die Dosiereinrichtung 3 entsprechend des Sollwertes eingestellt und/oder nachgeregelt wird. Somit wird die Stelleinrichtung 7 der Dosiereinrichtung 3 entsprechend angesteuert, um die vorgesehene Ausbringmenge zu überwachen und einzustellen.

Dieses in dem Speicher des Bordrechner 8 hinterlegte Programm weist Algorithmen auf, so dass die Messwerte der Wiegeeinrichtung 13 mit den Messwerten der Massenstromeinrichtung 21 so miteinander verknüpft werden, so dass eine intervallweise Kalibrierung der Werte der Massenstromermittlung der Massenstromeinrichtung 21 aufgrund der jeweils aktuell ermittelten Messwerte erfolgt und/oder durchführbar ist. Aufgrund dieser erfindungsgemäßen Verknüpfung der Messwerte der Massenstromeinrichtung 21 mit den Messwerten der Wiedereinrichtung braucht für die Auswertung der Messwerte des Sensors 20 der Massenstromeinrichtung 21 kein Kennfeld und/oder keine Belastungskennlinien hinterlegt sein.

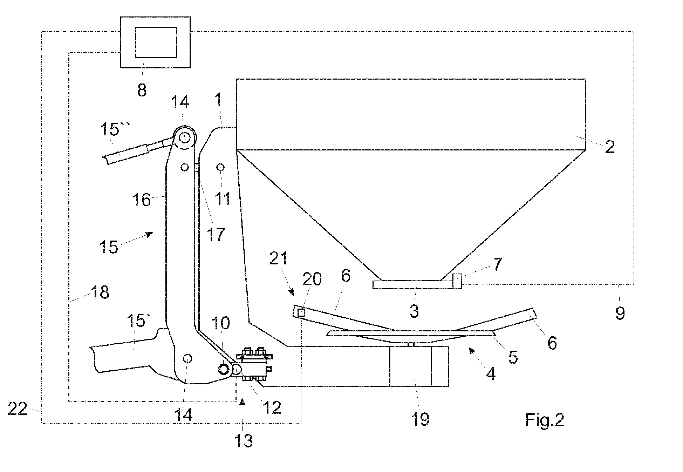

Bei dem Ausführungsbeispiel nach Fig. 2 ist der Sensor 20 der Massenstromeinrichtung 21 an den Wurfschaufeln 6 angeordnet. Somit befindet sich der Sensor 20 der Massenstromeinrichtung 21 im Schaufelbereich bzw. im Schleuderscheibenbereich. Mittels dieses an den Wurfschaufeln 6 angeordneten Sensors 20 lassen sich dem ausgebrachte Massenstrom entsprechende Messwerte für die Menge des aktuell ausgebrachten Materiales ermitteln.

Auch ist es möglich, an dem Schleuderstreuer einen Sensor der Massenstromeinrichtung, der zur Abtastung des von den Wurfschaufeln der Schleuderscheibe abgeworfenen Materialstromes geeignet ist, anordnen. Dieser Sensor ist ebenfalls mit einer Datenleitung mit dem Bordrechner verbunden.

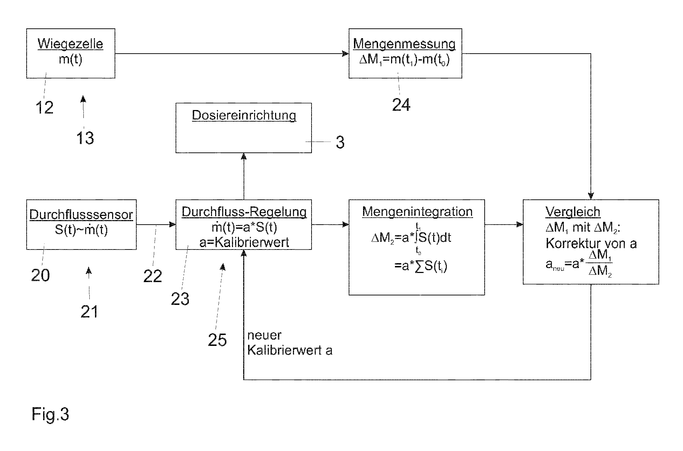

Die Funktionsweise des erfindungsgemäßen kombinierten Systems der Massenstromeinrichtung und der Wiedereinrichtung ist folgende, wie anhand des Blockschaltbildes gemäß Fig. 3 erläutert wird:

Der als Durchflusssensor bezeichnete Sensor der Massenstromeinrichtung wie folgt Messwerte an den Bordrechner. In den Bordrechner ist eine Durchflussregelung, welche auf einen in dem Speicher des Bordrechners hinterlegt des Programm mit Algorithmen aufbaut.

Der als Wiegezelle 12 bezeichnete Sensor der Wiegeeinrichtung 13 nimmt eine intervallweise Mengenmessung 24 vor. Diese Mengenmessung 24 wird nach in dem Speicher des Bordrechners 8 hinterlegten Auswertealgorithmen berechnet. Dieses in dem Speicher des Bordrechners 8 hinterlegte Programm weist Algorithmen auf, so dass die Messwerte der Wiegereinrichtung 13 mit den Messwerten der Massenstromeinrichtung 21 so miteinander verknüpft werden, so dass eine intervallweise Kalibrierung der Werte der Massenstromermittlung 21 der Massenstromeinrichtung aufgrund der jeweils aktuell ermittelten Messwerte erfolgt und/oder durchführbar ist. Aufgrund dieser erfindungsgemäßen Verknüpfung der Messwerte der Massenstromeinrichtung 21 mit den Messwerten der Wiegeeinrichtung 13 brauchen für die Auswertung der Messwerte des Sensors 20 der Massenstromeinrichtung 21 kein Kennfeld und/oder keine Belastungskennlinien hinterlegt sein.

Der jeweils ermittelte Messwert ist der neue Kalibrierwert, mittels welchem der Messwert des Durchflusssensors 20 aufgrund des in dem Bordrechner 8 hinterlegten Programms neu kalibriert bzw. nachkalibriert wird. Aufgrund dieses neuen von der Durchführungsregelung 25 berechneten Wertes wird über den Bordrechner 8 und das Stellelement 7 die Dosiereinrichtung 3 entsprechend nachgeregelt.

## Patentansprüche

1. Zentrifugalstreuer mit Vorratsbehälter und zumindest einer von einer Antriebsvorrichtung rotierend angetriebenen und mit Wurfschaufeln besetzte Schleuderscheibe, der die auszubringenden körnigen Materialien in einstellbaren Mengen aus dem Vorratsbehälter über zumindest eine von zumindest einer motorischen Einstelleinrichtungen einstellbaren Dosiereinrichtung zuführbar sind, wobei zumindest ein Sensor einer Wiegevorrichtung zur direkten Ermittlung der Masse des sich im Vorratsbehälter befindlichen auszubringenden Materiales vorhanden ist, wobei zumindest ein Sensor einer Massenstromeinrichtung zur indirekten Ermittlung und/oder Überwachung des von der Dosiereinrichtung der Schleuderscheibe zugeleiteten Massenstromes vorhanden ist, wobei die Sensoren der Wiegeeinrichtung und der Massenstromeinrichtung die von ihnen ermittelten Daten an einem Bordrechner zur Auswertung und/oder zur Anzeige auf einer Anzeigevorrichtung und/oder die Regelung und/oder Ansteuerung der Einstelleinrichtung der Dosiereinrichtung übermitteln, **dadurch gekennzeichnet, dass** in dem Speicher des Bordrechners (8) ein Programm mit Algorithmen hinterlegt ist, so dass die Messwerte der Wiegeeinrichtung (13) mit den Messwerten der Massenstromeinrichtung (21) so miteinander verknüpft werden, so dass eine intervallweise Kalibrierung der Werte der Massenstromermittlung der Massenstromeinrichtung (21) aufgrund der jeweils aktuell ermittelten Messwerte erfolgt und/oder durchführbar ist.

2. Zentrifugalstreuer nach Anspruch 1, **dadurch gekennzeichnet, dass** der Sensor (20) der Massenstromeinrichtung (21) zur Ermittlung des Drehmoment des der Antriebsvorrichtung (19) für die Schleuderscheiben (5) geeignet ist.

3. Zentrifugalstreuer nach Anspruch 2, **dadurch gekennzeichnet, dass** der Sensor (20) der Massenstromeinrichtung (21) zur Messung des Druckes in einem hydraulischen Antriebssystem (19) zum Antrieb der mit Wurfschaufeln (6) besetzten Schleuderscheiben (5) ausgebildet ist.

4. Zentrifugalstreuer nach Anspruch 2, **dadurch gekennzeichnet, dass** der Sensor (20) der Massenstromeinrichtung (21) zur Messung des Drehmomentes in einem mechanischen Antriebssystem (19) zum Antrieb der mit Wurfschaufeln (6) besetzten Schleuderscheiben (5) ausgebildet ist.

5. Zentrifugalstreuer nach Anspruch 1, **dadurch gekennzeichnet, dass** der Sensor der Massenstromeinrichtung zur Abtastung des von den Wurfschaufeln (6) der Schleuderscheibe (5) abgeworfenen Materialstromes geeignet ist.

6. Zentrifugalstreuer nach Anspruch 1, **dadurch gekennzeichnet, dass** der Sensor (20) der Massenstromeinrichtung (21) an zumindest einer der Wurfschaufeln (6) und/oder auf der Schleuderscheibe (5), vorzugsweise im Bereich zumindest einer der Wurfschaufeln (6) angeordnet ist.
